# EUROPEAN PATENT APPLICATION

(11) **EP 4 759 659 A1**
(43) Date of publication of application: **17.06.2026**
(21) Application number: 24220292.7
(22) Date of filing: 16.12.2024
(51) Int. Cl.: B60W 50/023, B60W 50/04

(54) **A METHOD FOR CONTROLLING A VEHICLE BASED ON A REDUNDANT SYSTEM**

(71) Applicant: Volvo Truck Corporation, 405 08 Göteborg (SE)
(72) Inventor: Essayeh, Salmane, 411 34 Göteborg (SE); Möller, Daniel, 445 56 Ale (SE); Rakholia, Meet Vitthalbhai, 431 34 Mölndal (SE); Thai, Vi Cuong, 422 49 Hisings Backa (SE)
(74) Representative: Valea AB

(57) **Abstract**

A computer-implemented method for controlling a vehicle is disclosed. The vehicle is associated with a first subsystem (26), and a second subsystem (28) redundant to the first subsystem. The method comprises receiving (S102), by processing circuitry (302) of a computer system (300), from the first subsystem, first data (27) associated with an operation to be performed by the vehicle. The method comprises receiving (S104), by the processing circuitry, from the second subsystem, second data (29) associated with the operation to be performed by the vehicle. The method comprises obtaining (S106), by the processing circuitry, a set of weights comprising a first weight associated with the first subsystem and a second weight associated with the second subsystem. The first weight is for example based on a first health parameter of the first subsystem. The second weight is for example based on a second health parameter of the second subsystem. The method comprises determining (S116), by the processing circuitry, an output.

## Description

### TECHNICAL FIELD

The disclosure relates generally to systems, such as control systems, and control systems for vehicles. In particular aspects, the disclosure relates to a method for controlling a vehicle and related devices. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Vehicles, such as autonomous vehicles, may rely on one or more systems, such as subsystems, for information about the vehicle. These vehicles may control one or more components of the vehicle based on this information obtained from the system. Therefore, it is of utmost importance that this information is reliable to reduce the likelihood of incorrect control of the components. Improving reliability and/or rectifying any discrepancy in system outputs can be extremely complicated due to the interconnected nature of the components of the vehicle.

An approach to address reliability has been to implement redundant systems in the vehicle. In a redundant system, there may be a primary and a secondary system performing the same calculations. The outputs may be used simultaneously to monitor their sanity, identify the failures, and pinpoint the origin of the failure, e.g., software, hardware, or communication.

Redundant systems may perform a handover from the first system to the secondary system without performing a continuous check on the secondary side. Hence, these redundant systems may be vulnerable to failure, mal-function, and/or unreliable behavior.

### SUMMARY

Accordingly, there is a need for a computer system and a method for controlling a vehicle, which mitigate, alleviate, or address the shortcomings existing and improve the reliability, robustness, and dependability of data used for control of the vehicle.

According to a first aspect of the disclosure, a computer-implemented method for controlling a vehicle is disclosed. The vehicle may be associated with a first subsystem, and a second subsystem redundant to the first subsystem. The method comprises receiving, by processing circuitry of a computer system, from the first subsystem, first data associated with an operation to be performed by the vehicle. The method comprises receiving, by the processing circuitry, from the second subsystem, second data associated with the operation to be performed by the vehicle. The method comprises obtaining, by the processing circuitry, a set of weights comprising a first weight associated with the first subsystem and a second weight associated with the second subsystem. The first weight is for example based on a first health parameter of the first subsystem. The second weight is for example based on a second health parameter of the second subsystem. Optionally, the method comprises determining, by the processing circuitry, an output based on the first data, the second data and the set of weights. The method comprises optionally generating, by the processing circuitry, based on the output, control data for controlling the vehicle.

The first aspect of the disclosure may seek to improve robustness resulting from relying on redundant systems.

A technical benefit may provide improved reliability of the control data used for controlling the vehicle, such as an autonomous vehicle. This facilitates improved safety of the operation of the vehicle, for example enabling improved safety for cargo and/or occupants of the vehicle and/or entities (e.g., pedestrians, other vehicles, infrastructure) external to the vehicle.

The methods and systems disclosed herein may advantageously use the available outputs from two or more subsystems in a redundant system to examine their sanity, such as the robustness and reliability, of the outputs of the subsystem.

Advantageously, the disclosed methods and systems may enable the control data to be accurate, even when a redundant system is not functioning properly or as expected. For example, when a first subsystem and a second redundant subsystem provide different outputs, the disclosed methods and systems may enable, e.g., using a set of weights, provision of a more reliable output, thereby enabling a more accurate control data to be generated facilitating safer operation of the vehicle. In other words, the disclosed methods and systems may in some examples be seen as an additional layer of safety and/or security to act as a failsafe when the redundant system fails to ensure a more robust output, such as less erroneous output.

Optionally in some examples, including in at least one preferred example, determining, by the processing circuitry, the output based on the first data, the second data and the set of weights comprises selecting, from the first data and the second data, data from a subsystem associated with the highest weight. A technical benefit may include a further improved reliability, and/or robustness of the output, e.g. control data for controlling operation of a vehicle, thereby enabling improved safety of the operation of the vehicle. For example, the second subsystem which is the redundant one is often perceived as the fail-safe subsystem or the more reliable subsystem. However, for example, the second subsystem may in fact not be the more reliable subsystem. By selecting data from the subsystem associated with the highest weight indicative of the health and/or of the reliability of that subsystem, the subsystem selected is objectively the most reliable.

Optionally in some examples, including in at least one preferred example, determining, by the processing circuitry, the output based on the first data, the second data and the set of weights comprises combining the first data and the second data based on the set of weights. A technical benefit may include providing a more reliable output based on an accurate combination of the first and second data, thereby improving the reliability, and/or robustness of the output, e.g. control data for controlling operation of a vehicle,. This may advantageously enable an improved safety of the operation of the vehicle.

Optionally in some examples, including in at least one preferred example, combining the first data and the second data based on the set of weights comprises applying a linear combination based on the set of weights to the first data and the second data. A technical benefit may include allowing for efficiently combining the first and second data, thereby enabling a computationally efficient combination of the first data and the second data, e.g., advantageously resulting in an improvement in the speed, adaptability, and/or reliability of the operations and/or processes of the vehicle. This may be particularly advantageous for autonomous vehicle where real-time or quasi real-time processing of the combination may be needed.

Optionally in some examples, including in at least one preferred example, combining the first data and the second data based on the set of weights comprises applying one or more of: a weighted average using the set of weights, a weighted median using the set of weights, and a variance-weighted average. A technical benefit may include facilitating the computation of the output, e.g. control data for controlling operation of a vehicle, thereby improving the reliability and/or robustness of the output, which may for example enable improved safety of the operation of the vehicle.

Optionally in some examples, including in at least one preferred example, the method comprises comprising comparing, by the processing circuitry, the first data with the second data. technical benefit may lead to detecting discrepancies between the two subsystems, and thereby to possibly determining which subsystem is more reliable..

Optionally in some examples, including in at least one preferred example, the method comprises obtaining, by the processing circuitry, third data from a monitoring subsystem associated with the first and/or second subsystem. Optionally in some examples, including in at least one preferred example, the method comprises comparing, by the processing circuitry, the first data and the second data with the third data. A technical benefit may include improving the detection of discrepancies between the two subsystems, and thereby to possibly determining which subsystem is more reliable.

Optionally in some examples, including in at least one preferred example, determining the output comprises determining the output based on the comparison. A technical benefit may include improving the reliability, and/or robustness of the output, e.g. control data for controlling operation of the vehicle. This may advantageously enable an improved safety of the operation of the vehicle.

Optionally in some examples, including in at least one preferred example, receiving the first data comprises receiving a first instruction comprising the first data.

Optionally in some examples, including in at least one preferred example, receiving the second data comprises receiving a second instruction comprising the second data.

Optionally in some examples, including in at least one preferred example, the first data and the second data are received in a same timeslot. A technical benefit may include improving the detection of discrepancies between the first data and second data, on the same basis e.g., in that they correspond to the same time. This may for example advantageously improve the reliability, and/or robustness of the output, e.g., thereby enabling improved safety of the operation of the vehicle.

Optionally in some examples, including in at least one preferred example, the method comprises obtaining, by the processing circuitry, updated health parameters. A technical benefit may include the ability to maintain an accurate representation of the state of health of the subsystems, and thereby maintain the improved reliability, and/or robustness of the output over time. This may for example enable improved safety of the operation of the vehicle.

Optionally in some examples, including in at least one preferred example, the method comprises updating, by the processing circuitry, the set of weights based the updated health parameters and a factor. A technical benefit may include the ability to maintain the set of weights updated to reflect the state of health of the subsystems, and thereby maintain an improved reliability, and/or robustness of the set of weights and thereby the output, e.g., over a time period. This may for example enable improved safety of the operation of the vehicle, such as an autonomous vehicle.

Optionally in some examples, including in at least one preferred example, the first subsystem, the second subsystem, or the first and second subsystems, comprises one or more of: a sensor, a software component, an electronic control unit, a steering subsystem, a controller subsystem. A technical benefit may include that subsystems can be varied and still benefit from the disclosed technique. This may be particularly advantageous for an autonomous vehicle (AV) that relies on input from a plethora of sensors to evaluate the environment in which the AV operates.

Optionally in some examples, including in at least one preferred example, the method comprises controlling, by the processing circuitry, the vehicle based on the control data. A technical benefit may include improved safety of the operation of the vehicle, e.g., by operating the vehicle based on the control data that is reliably determined or generated disclosed herein.

Optionally in some examples, including in at least one preferred example, the method comprising transmitting, by the processing circuitry, to a vehicle computer system, the control data. A technical benefit may include enabling the computer system to improve the reliability of the control data such as to enable a vehicle to be controlled using the control data.

According to a second aspect of the disclosure, a computer system is disclosed. The computer system comprises processing circuitry for controlling a vehicle. The vehicle is associated with a first subsystem, and a second subsystem redundant to the first subsystem. The processing circuitry is configured to receive, from the first subsystem, first data associated with an operation to be performed by the vehicle. The processing circuitry is configured to receive, from the second subsystem, second data associated with the operation to be performed by the vehicle. The processing circuitry is configured to obtain a set of weights comprising a first weight associated with the first subsystem and a second weight associated with the second subsystem. The first weight is for example based on a first health parameter of the first subsystem. The second weight is for example based on a second health parameter of the second subsystem. The processing circuitry is configured to determine an output based on the first data, the second data and the set of weights. The processing circuitry is configured to generate, based on the output, control data for controlling the vehicle. The second aspect of the disclosure may seek to address the shortcomings of redundant systems with regard to robustness and/or reliability. A technical benefit may include advantageously facilitating an improved reliability of the control data used for controlling the vehicle, such as an autonomous vehicle. This may advantageously facilitate an improved safety of the operation of the vehicle, for example enabling improved safety for occupants of the vehicle and/or entities (e.g., pedestrians) external to the vehicle.

According to a third aspect of the disclosure, a vehicle comprising a computer system as disclosed herein. A technical benefit may include advantageously facilitating an improved reliability of the control data used for controlling the vehicle, and thereby improving safety..

According to a fourth aspect of the disclosure, disclosed is a computer program product comprising program code for performing, when executed by the processing circuitry, the method disclosed herein. A technical benefit may include advantageously facilitating an improved reliability of the control data used for controlling the vehicle, and thereby improving safety.

According to a fifth aspect of the disclosure, disclosed is a non-transitory computer-readable storage medium comprising instructions, which when executed by the processing circuitry, cause the processing circuitry to perform the method disclosed herein. A technical benefit may include advantageously facilitating an improved reliability of the control data used for controlling the vehicle, and thereby improving safety.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings. The above and other features and advantages of the present disclosure will become readily apparent to those skilled in the art by the following detailed description of exemplary embodiments thereof with reference to the attached drawings, in which:
**FIG. 1** is a diagram illustrating an exemplary vehicle according to this disclosure;
**FIG. 2** shows a system diagram of an exemplary computer system according to at his disclosure;
**FIGS. 3A-3B** show a flow chart illustrating an example method for controlling a vehicle according to this disclosure.

### DETAILED DESCRIPTION

The detailed description set forth below provides information and examples of the disclosed technology with sufficient detail to enable those skilled in the art to practice the disclosure.

Various exemplary embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the disclosure or as a limitation on the scope of the disclosure. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

The figures are schematic and simplified for clarity, and they merely show details which aid understanding the disclosure, while other details have been left out. Throughout, the same reference numerals are used for identical or corresponding parts.

A subsystem as disclosed herein, such as the first subsystem and/or the second subsystem, may be seen as a part of a system (e.g. a system that may include other components as well). The term "sub" can be seen as denoting a secondary or subordinate level, indicating that subsystems operate as part of a larger, such as broader, system and/or network. In some examples, a subsystem may include modules and/or circuits configured to execute particular tasks, such as signal processing, control operations, data acquisition, and/or communication functions. The subsystem may for example be configured to perform one or more calculations associated with the control of a vehicle, such as an autonomous vehicle. The subsystem may for example be an electronic control unit, ECU. The subsystem may for example be a software component, SWC. The subsystem may for example comprises one or more of: a sensor, a software component, an electronic control unit, a steering subsystem, and a controller subsystem.

A weight (such as the first weight, second weight, and/or third weight) as disclosed herein may for example be seen as a coefficient that determines the contribution or importance of each vector or element (such as the first, second, and/or third data), such as in a combination or a function,. A weight for example comprises one or more of: a scalar value, a coefficient, an exponent, and a multiplicative constant. In some examples, the weight comprises a value (e.g., integer, real number) that determines the importance or contribution level (such as magnitude) of data within a weighted combination provided by a subsystem. A set of weights as disclosed herein may comprise one or more weights (such as the first weight associated with a first subsystem, second weight associated with a second subsystem, and/or third weight associated with a third subsystem). The first weight may be based on a first health parameter of the first subsystem, and the second weight may be based on a second health parameter of the second subsystem. One or more weights of the set of weights may for example have a linear relation to the health status of the corresponding subsystem.

A health parameter as disclosed herein (such as the first health parameter, the second health parameter, and/or the third health parameter) may be seen as a parameter indicative of the health, such as a health status, such as a health state, of the corresponding subsystem, such as a part of a corresponding subsystem. In some examples, the health parameter is indicative of the availability and/or reliability of the corresponding subsystem. For example, the first health parameter is indicative of the health of the first subsystem 26, the second health parameter is indicative of the health of the second subsystem 28, and/or the third health parameter is indicative of the health of the monitoring subsystem 30. In one or more examples, the health parameter can be seen as being associated with the reliability of the corresponding subsystem. For example, when the health parameter comprises a value, a higher value may indicate a greater health (such as availability, and/or reliability) of the corresponding subsystem. The health parameter may be obtained by querying a look up table storing, for each subsystem, a health parameter, optionally with the corresponding weights. In some examples, the health parameter of a subsystem can be obtained using one or more methods for example: using the health status provided by the components (e.g. actuators providing health statuses feedback), using sanity check(s) over the produced signals by a subsystem, and/or form monitoring power/current consumption for ECUs.

The second subsystem (e.g., redundant to the first subsystem) may be seen as a subsystem configured for redundancy, e.g., to ensure continued operation or performance in the event of a lack of robustness of the first subsystem. For example, the second subsystem may serve as a backup and/or fail-safe within the broader system. In other words, the second subsystem may enable the computer system disclosed herein to determine an output with improved reliability when the first subsystem fails. The second subsystem may for example comprise additional hardware elements and/or software elements which can at least partly take over the function of the first subsystem when needed, e.g., in case of failure of the first subsystem. The term "redundant" as used herein denotes that the second subsystem may comprise duplicative components and/or techniques that may function parallel to one or more components and/or techniques. In some examples, the redundant second subsystem may comprise auxiliary elements, such as extra power supplies, duplicate processors, and/or backup communication lines as, e.g., as a backup and/or fail-safe for the first subsystem.

The present disclosure address inter alia the situation where a redundant subsystems may not be the more reliable subsystem, even if it is often assumed to be the more reliable subsystem. Redundant subsystems may be vulnerable to failure, mal-function, and/or unreliable behavior. The present disclosure provides, inter alia, a technique that allows to combine, and/or consolidate data from the first subsystem and the second subsystem which is the redundant subsystem based on weights that are objectively based on health parameter of each subsystems. For example, the result of the combination is an output that is used to general control data for controlling a vehicle.

The output disclosed herein may be used to generate control data. Control data as disclosed herein may for example be seen as data for controlling the vehicle. For example, a vehicle may be controlled based on the control data. In other words, control data may be seen as data utilized in controlling of a vehicle's functions and/or operations. For example, control data may comprise one or more instructions, parameters, and/or signals involved in the execution of one or more functions and/or operations the carried out by the vehicle, such as by a control system of a vehicle.

The disclosed technique can be applied by a system that can act as an interface of the vehicle, such as a computer system and/or a control system. The computer system 300 can either be a software defined autonomous pilot of the vehicle provided at manufacture , a software defined autonomous pilot provided by a supplier to the vehicle manufacturer and/or provided to a human pilot using a Human Machine Interface (HMI), the computer system may improve controllability of the vehicle for any kind of controller of the vehicle.

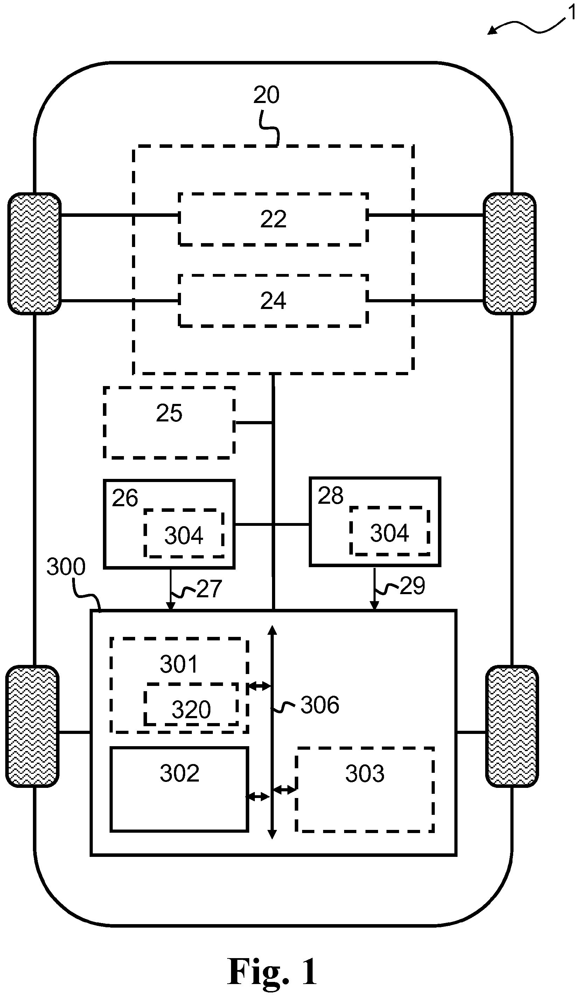

**FIG. 1** is a diagram illustrating an exemplary vehicle 1 according to this disclosure. The exemplary vehicle 1 comprises a computer system 300. The computer system 300 comprises a processing circuitry 302, and optionally a memory circuitry 301, and optionally an interface 303. The computer system 300 is configured to perform any of the methods disclosed herein, such as the methods disclosed herein.

Vehicle 1 is seen as a land-based transportation system, such as a car. The vehicle 1 may for example be a heavy-duty vehicle, such as a truck, a bus, a construction equipment, among other vehicle types.

Vehicle 1 may for example be an autonomous vehicle, such as a vehicle configured to drive autonomously. In some examples, the vehicle 1 may be partially autonomous. In other words, the vehicle 1 may be configured to autonomously perform one or more operations. In some examples, vehicle 1 is a driverless truck.

In some examples, the computer system 300 may be seen as an autonomous system, e.g., configured for controlling the vehicle 1. In some examples, vehicle 1 includes autonomous functionalities may enable the vehicle 1 to be operated partially or fully without human intervention. Such functionalities may encompass vehicles operating in a fully autonomous manner where human intervention may not be required, and/or vehicles operating partially autonomously.

Vehicle 1 comprises a control system 20. The control system 20 comprises a powertrain control subsystem 22, a steering control subsystem 24. The control system 20 may for example comprise a braking subsystem. The control system 20 is communicatively coupled with the computer system 300. In some examples, the control system 20 may be confiugred to operate (e.g., controlled) based on control data disclosed herein, such as control data generated by the computer system 300. For example, one or more of the powertrain control subsystem 22, the steering control subsystem 24, and the braking subsystem may be operated (e.g., controlled) based on control data, such as control data generated by the computer system 300. The computer system 300 may provide control data to the control system 20 (such as to the powertrain control subsystem 22, the steering control subsystem 24, and/or the braking subsystem).

The vehicle 1 comprises a drive-by-wire system 25. The drive-by-wire system 25 may for example be operated based on the control data disclosed herein. In other words, the drive-by-wire system 25 may operate the control system based on the control data generated by the processing circuitry. For example, the control system 20 may be controlled, based on the control data, by the drive-by-wire system 25. The drive-by-wire system 25 for example comprises one or more of: a brake-by-wire system, a shift-by-wire system, a steer-by-wire system, and a throttle-by-wire system. In some examples, the drive-by-wire system 25 may be seen as a part of the control system 20.

The vehicle 1 comprises a first subsystem 26 and a second subsystem 28. The first subsystem 26, the second subsystem 28, or the first and second subsystems 26, 28 for example comprise one or more of: a sensor, a software component, an electronic control unit, a steering subsystem, and a controller subsystem.

For example, the first subsystem 26, the second subsystem 28, or the first and second subsystems 26, 28 may comprise one or more sensors 304. The one or more sensors 304 for example comprise one or more: cameras, LiDAR sensors, microphones, pressure sensors (e.g. for a braking system), steering angle sensors, and radar sensors. In one or more examples, the one or more sensors 304 may comprise one or more: ultrasonic sensors, inertial sensors, GPS receivers, and odometry sensors. The one or more sensors be configured to obtain information associated with the vehicle 1.

The first subsystem and the second subsystem may obtain sensor data from the one or more sensors 304. The first subsystem for example determines, such as generates, the first data 27 based on the sensor data obtained from the one or more sensors 304. The second subsystem for example determines, such as generates, the second data 29 based on the sensor data obtained from the one or more sensors 304.

The first data 27, the second data 29 and/or the third data is for example based on sensor data, e.g., obtained via the one or more sensors 304. In some example, he first data 27, the second data 29 and/or the third data may each include sensor data. In some examples, the data 27, 29, may be provided to the computer system 300 as a request, e.g., a request for the computer system 300. In other words, the computer system 300 receiving the first data 27 and the second data 29 (and optionally the third data) may be seen as a request for the computer system 300, e.g., to determine an output based on the first data 27, the second data 29, and the set of weights.

The computer system 300 receives first data 27 from the first subsystem 26. The computer system 300 receives second data 29 from the second subsystem 28.

Fig. 1 shows a block diagram of an example computer system 300 according to the disclosure. The computer system 300 comprises processor circuitry 302. The computer system may for example comprise memory circuitry 301 and an interface 303. The computer system 300 is configured to perform any of the methods disclosed herein. The computer system 300 may for example be seen as a control data generation system, such as a computer system configured for generation of control data. In other words, the computer system 300 is configured for controlling a vehicle (e.g., vehicle 1), such as an autonomous vehicle, based on control data. The computer system 300 may for example be seen as an arbitrator and/or comparator. For example, the computer system 300 may for example be seen as a sanity monitoring system, e.g., configured to monitor the sanity of the first subsystem, second subsystem, and/or monitoring subsystem. In some examples, the interface 303 is a wireless interface, such as a wireless interface configured for wireless transmission.

The computer system 300 is configured to receive, by processing circuitry 302 of the computer system, from the first subsystem 26, first data 27 associated with an operation to be performed by the vehicle.

The computer system 300 is configured to receive, by the processing circuitry 302, from the second subsystem 28, second data 29 associated with the operation to be performed by the vehicle.

The computer system 300 is configured to obtain, by the processing circuitry 302, a set of weights comprising a first weight associated with the first subsystem 26 and a second weight associated with the second subsystem 28. The first weight is for example based on a first health parameter of the first subsystem 26. The second weight is for example based on a second health parameter of the second subsystem 28.

The computer system 300 is configured to determine, by the processing circuitry 302, an output based on the first data 27, the second data 29 and the set of weights. The computer system 300 is configured to generating, by the processing circuitry 302, based on the output, control data for controlling the vehicle.

Furthermore, the operations of the computer system 300 may be considered a method that the computer system 300 is configured to carry out. Also, while the described functions and operations may be implemented in software, such functionality may as well be carried out via dedicated hardware or firmware, or some combination of hardware, firmware and/or software.

The memory circuitry 301 may be one or more of a buffer, a flash memory, a hard drive, a removable media, a volatile memory, a non-volatile memory, a random access memory (RAM), or another suitable device. In a typical arrangement, the memory circuitry 301 may include a non-volatile memory for long term data storage and a volatile memory that functions as system memory for the processor circuitry 302. The memory circuitry 301 may exchange data with the processor circuitry 302 over a data bus. Control lines and an address bus (such as system 306) between the memory circuitry 301 and the processor circuitry 302 also may be present. The memory circuitry 301 is considered a non-transitory computer readable medium.

The memory circuitry 301 may be configured to store first data, second data, third data, a set of weights, first health parameter, second health parameter, third health parameter, an output, control data, first instruction, second instruction, updated health parameters, and/or a factor in a part of the memory.

The computer system 300 is adapted to execute instructions from a computer-readable medium to perform these and/or any of the functions or processing described herein. The computer system 300 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 300 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit, or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 300 may comprise at least one computing device or electronic device capable of including firmware, hardware, and/or executing software instructions to implement the functionality described herein. The computer system 300 may include processing circuitry 302 (e.g., processing circuitry including one or more processor devices or control units), a memory 301, and a system bus 306. The computer system 300 may include at least one computing device having the processing circuitry 302. The system bus 306306 provides an interface for system components including, but not limited to, the memory 301 and the processing circuitry 302. The processing circuitry 302 may include any number of hardware components for conducting data or signal processing or for executing computer code stored in memory 301. The processing circuitry 302 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 302 may further include computer executable code that controls operation of the programmable device.

The system bus 306 may be any of several types of bus structures that may further interconnect to a memory bus (with or without a memory controller), a peripheral bus, and/or a local bus using any of a variety of bus architectures. The memory 301 may be one or more devices for storing data and/or computer code for completing or facilitating methods described herein. The memory 301may include database components, object code components, script components, or other types of information structure for supporting the various activities herein. Any distributed or local memory device may be utilized with the systems and methods of this description. The memory 301may be communicably connected to the processing circuitry 302 (e.g., via a circuit or any other wired, wireless, or network connection) and may include computer code for executing one or more processes described herein. The memory 301may include non-volatile memory (e.g., read-only memory (ROM), erasable programmable read-only memory (EPROM), electrically erasable programmable read-only memory (EEPROM), etc.), and volatile memory (e.g., random-access memory (RAM)), or any other medium which can be used to carry or store desired program code in the form of machine-executable instructions or data structures, and which can be accessed by a computer or other machine with processing circuitry 301. A basic input/output system (BIOS) may be stored in the non-volatile memory and can include the basic routines that help to transfer information between elements within the computer system 300.

The computer system 300 may further include or be coupled to a non-transitory computer-readable storage medium such as the storage device , which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard coded in circuitry to implement the functionality described herein in whole or in part. The modules may be stored in the storage device and/or in the volatile memory 301, which may include an operating system and/or one or more program modules . All or a portion of the examples disclosed herein may be implemented as a computer program 320 stored on a transitory or non-transitory computer-usable or computer-readable storage medium (e.g., single medium or multiple media), such as the storage device and/or a memory 301 , which includes complex programming instructions (e.g., complex computer-readable program code) to cause the processing circuitry 302 to carry out actions described herein. Thus, the computer-readable program code of the computer program 320 can comprise software instructions for implementing the functionality of the examples described herein when executed by the processing circuitry 302. In some examples, the storage device and/or memory 301 may be a computer program product (e.g., readable storage medium) storing the computer program 320 thereon, where at least a portion of a computer program may be loadable (e.g., into a processor) for implementing the functionality of the examples described herein when executed by the processing circuitry 302. The processing circuitry 302 may serve as a controller or control system for the computer system 300 that is to implement the functionality described herein.

The computer system 300 may include an input device interface configured to receive input and selections to be communicated to the computer system 300 when executing instructions, such as from a keyboard, mouse, touch-sensitive surface, etc. Such input devices may be connected to the processing circuitry 302 through the input device interface (e.g. interface 303) coupled to the system bus 306 but can be connected through other interfaces, such as a parallel port, an Institute of Electrical and Electronic Engineers (IEEE) 1394 serial port, a Universal Serial Bus (USB) port, an IR interface, and the like. The computer system 300 may include an output device interface (e.g. part of the interface 303) configured to forward output, such as to a display, a video display unit (e.g., a liquid crystal display (LCD) or a cathode ray tube (CRT)). The computer system 300 may include a communications interface (e.g. interface 303) suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

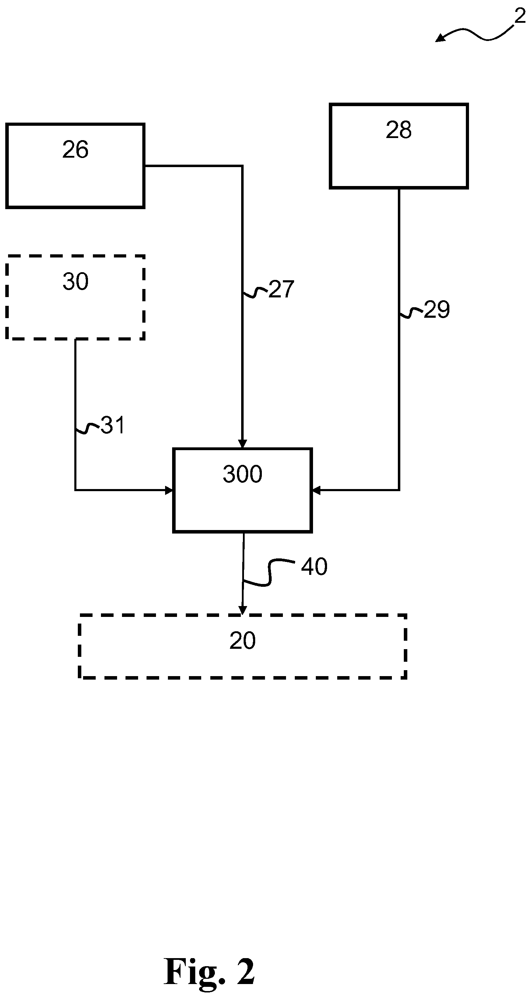

**FIG. 2** shows a system diagram of an exemplary system 2 according to this disclosure. The system 2 comprises a computer system 300. The computer system 300 is for example the computer system 300 disclosed herein, such as the computer system 300 shown in Fig. 1. The computer system 300 or the system 2 is for example configured for controlling a vehicle, such as the vehicle 1 shown in Fig. 1.

The control system 20, the first subsystem 26, the second subsystem 28, the first data 27, and the second data 29 are for example the same as shown in Fig. 1.

The system 2 comprises the first subsystem 26 and a second subsystem 28.. The second subsystem 28 is for example redundant to the first subsystem 26.

The first subsystem 26 may for example be seen as a first ECU or a first SWC. The first subsystem 26 may perform a "lambda" calculation, such as a brake force calculation. The "lambda" calculation can for example be seen as a calculation for provision of a parameter that may be used for control of a vehicle, such as a brake force parameter. In other words, the first subsystem 26 may determine, e.g., based on the sensor data obtained from one or more sensors (such as the one or more sensors 304 of Fig. 1), a brake force parameter indicative of a brake force for the vehicle to apply. The first data 27 for example comprises the calculated brake force parameter. The monitoring subsystem 30 (such as a performance monitor) may monitor the correctness of the "lambda" calculation, made by the first subsystem. The second subsystem 28 may for example be seen as a second ECU or a second SWC. The second subsystem 28 performing similar calculations to the "lambda" calculations made by the first subsystem 28.

The system 2comprises optionally a monitoring subsystem 30. The monitoring subsystem 30 is associated with the first subsystem 26. The monitoring subsystem 30 is for example configured to obtain, such as determine, third data. The monitoring subsystem 30 is for example configured to monitor the first subsystem 26, such as one or more determinations, such as calculations of the first subsystem 26.

The computer system 300 may for example obtain (such as receive, retrieve, and/or generate), a set of weights comprising a first weight associated with the first subsystem 26, a second weight associated with the second subsystem 28, and/or a third weight associated with the monitoring subsystem 30. The first weight is for example based on a first health parameter of the first subsystem 26. The second weight is based on a second health parameter of the second subsystem 28. The third weight is for example based on a third health parameter of the monitoring subsystem 30. In other words, the first health parameter corresponds with the first subsystem 26, the second health parameter corresponds with the second subsystem 28, and the third health parameter corresponds with the monitoring subsystem 30.

The computer system 300 is for example configured to determine an output based on the first data 27, the second data 28, the third data 31, and/or the set of weights, e.g., by applying the weights to the corresponding data. For example, the computer system 300 may be configured to apply the first weight to the first data 27, the second weight to the second data 28, and/or the third weight to the third data 31, e.g., for provision of an output. In other words, the output determined by the computer system 300 may be seen as a weighted output, such as linear combination taking the weights as coefficients applied the respective data, such as a weighted average.

The output may be seen as a weighted result and/or weighted value, indicative of the outcome derived from applying weights (e.g., the first weight, second weight, and/or third weight) to the first data 27, second data 29 and/or third data 31. For example, the output may comprise one or more values, such as a scalar, a vector, and/or a matrix, e.g., representing the adjusted contributions of inputs or parameters in a calculation. The output may for example be seen as being characterised by the weights applied to the data 27, 29, and/or 31. For example, the output may comprise a value (e.g., integer, real number, etc.) indicative of an outcome the application of the weights to the data 27, 29, and/or 31.

In other words, the computer system 300 may for example be configured to carry out a ponderation which of data 27, 29, and/or 31 is more logical and/or more trustable. For example, the computer system 300 may be configured to compare, such as cross-compare, between the first data 27, second data 29, and the third data 31.

The computer system 300 is for example configured to generate, based on the output, control data 40 for controlling the vehicle, such as vehicle 1 of Fig. 1. For example, the computer system 300 may provide the control data 40 to the control system 20. The control system 20 is for example configured to control the vehicle based on the received control data 40.

In one or more examples, the computer system 300 may be seen as being configured to monitor the sanity of the system 2, such as the sanity of the first subsystem 26, second subsystem 28, and/or the monitoring subsystem 30. In some examples, the computer system 300 can be seen as checking the respective performance between the subsystems 26, 28, and/or 30 of the system 2.

For example, when the first subsystem and the second subsystem (e.g., the redundant subsystem) provide differing outputs, the disclosed system 2 may enable, e.g., using a set of weights, improved robustness of the output, thereby improving the robustness of control data 40 to facilitate safer operation of the vehicle, such as the vehicle 1 in Fig. 1.

| Scenario | First Data | Second Data | Third Data | Status |
|---|---|---|---|---|
| 1 | 0 | 0 | 0 | All ok (all similar) |
| 2 | 0 | 0 | 1 | Monitoring subsystem failure |
| 3 | 0 | 1 | 0 | Second subsystem failure |
| 4 | 1 | 0 | 0 | First subsystem failure |
| 5 | 0 | 1 | 2 | Weighting to be applied |

Table 1 shown above illustrates 5 different scenarios applicable to the system 2. Values 0, 1, and 2 for the data is merely used for illustrative purpose, e.g., for the sake of simplicity. Table 1 shows the 5 scenarios and the corresponding values of the first data 27, second data 29, and third data 31. In scenario 1 of Table 1, the values are all the same. In scenarios 2-5 of Table 1, the first data 27, second data 29, and/or third data 31 have different values. In other words, the Table 1 shows a comparison between the first data, second data, and third data.

In scenarios 2-4, the system 2, such as the computer system 300, can determine a point of failure as only one subsystem is providing data having a value different to that of the other two subsystems. For example, in scenario 2 the system 2 may conclude that the monitoring subsystem 30 has failed, e.g., the third data provided by the monitoring subsystem is inaccurate. The system may then determine an output based on the first data 27 and/or the second data 29, e.g., excluding the third data 31.

In scenario 5 of Table 1 however, the first data 27, second data 29, and third data 31 each comprise different values when compared to one another. Hence, the system 2 judge which subsystem has the correct data, such as correctly calculated data. For scenario 5, the computer system 300 may be configured to carry out the method disclosed herein. For example, in scenario 5, the computer system 300 may determine an output based on the first data 27, the second data 29, and the set of weights. In some examples, in scenario 5, the computer system 300 may determine an output based on the first data 27, the second data 29, the third data 31, and the set of weights. In other words, in scenario 5, the computer system 300 may be seen as performing a weighted arbitration of the data 27, 29, and/or 31.

For example, in scenario 5, the first weight (W_1) is 0.5, the second weight (W_2) is 0.2, and the third weight (W_3) is 0.3. For example, the data may comprise information indicative of a speed of the vehicle, such as a speed for which the vehicle may be controlled (e.g., via the control system 20) to attain. For example, when the first data is indicative of -3 m/s², the second data is indicative of -1.5 m/s², and the third data is indicative of -5m/s², the computer system 300 may determine an output (e.g., by combining the first data, the second data, and the third data, based on the set of weights), indicative of -3.3m/s².

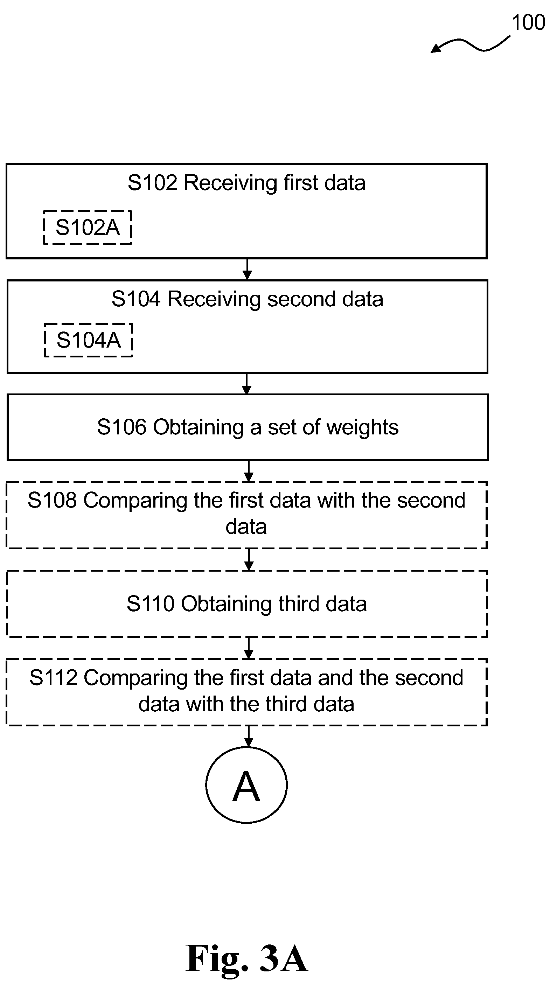

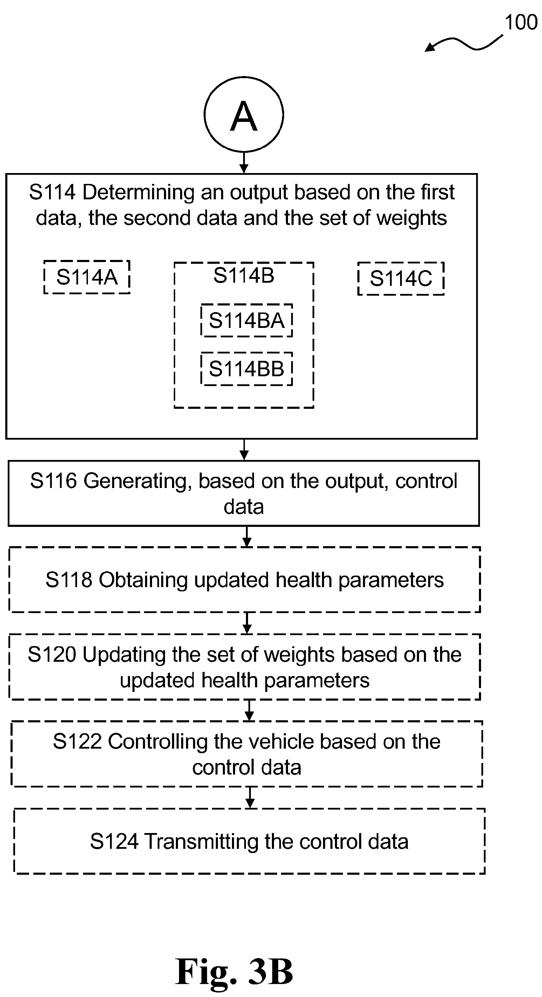

**FIGS. 3A-3B** show a flow chart illustrating an example method 100 for controlling a vehicle according to this disclosure. The example method 100 is performed by a computer system, such as the computer system 300 disclosed herein, such as the computer system 300 shown in Figs. 1 and 2.

The disclosed technique can for example be applied to any system and/or subsystem that has and/or supports redundancy, such as redundant subsystems, e.g., the second subsystem.

A computer-implemented method 100 for controlling a vehicle is disclosed. The vehicle is associated with (e.g., comprises) a first subsystem, and a second subsystem redundant to the first subsystem. For example, the vehicle is associated with a computer system (e.g., the computer system disclosed herein). In some examples, the computer system comprises the first subsystem and the second subsystem. In some examples, the first subsystem and the second subsystem are external to the computer system. In one or more example methods, the first subsystem, the second subsystem, or the first and second subsystems, comprises one or more of: a sensor, a software component, an electronic control unit, a steering subsystem, a controller subsystem. The sensor may for example be a sensor of the one or more sensors 304 shown in Fig. 1. The steering subsystem may for example be the steering control subsystem 24 shown in Fig. 1. The controller subsytem may for example be the control system 20 shown in Fig. 1.

The method 100 comprises receiving S102, by processing circuitry of a computer system, from the first subsystem, first data associated with an operation to be performed by the vehicle. An operation to be performed by the vehicle may be seen as an action executed or planned for execution by one or more systems of the vehicle, such as the drive-by-wire system 25 and/or the control system 20 and/or any other subsystems of the vehicle 1 of Fig. 1. For example, the operation may for example comprise an acceleration in any given direction (e.g., enabled by throttle and/or brake modulation, and/or application of change of steering angle). In one or more example methods, receiving S102 the first data comprises receiving S102A a first instruction comprising the first data, such as the first data 27 shown in Figs. 1-2. The first instruction may for example be seen as a first request. The first instruction may for example be indicative of an action to be performed by the vehicle, such a request for an action by the vehicle, such as the vehicle 1 of Fig. 1. For example, the first instruction may comprise a first brake force parameter, e.g., instructive of a first brake force to be applied by the vehicle.

The method 100 comprises receiving S104, by the processing circuitry, from the second subsystem, second data associated with the operation to be performed by the vehicle. In one or more example methods, receiving S104 the second data comprises receiving a second instruction S104A comprising the second data, such as the second data shown in Figs. 1-2. The second instruction may for example be seen as a second request. The second instruction may for example be indicative of an action to be performed by the vehicle, such as the vehicle 1 of Fig. 1. For example, the second instruction may comprise a second brake force parameter, e.g., instructive of a second brake force to be applied by the vehicle.

In one or more example methods, the first data and the second data are received in a same timeslot. The first data and the second data being received in the same timeslot may for example comprise the first data and the second data being received simultaneously, or within the same short time window. In some examples, the first data, second data, and/or the third data are received in the same timeslot. In other words, the computer system and/or the monitoring subsystem may be configured to monitor the first and second subsystems at the same time.

The method 100 comprises obtaining S106, by the processing circuitry, a set of weights comprising a first weight associated with the first subsystem and a second weight associated with the second subsystem. Obtaining S106 the set of weights for example comprises receiving, retrieving (e.g. from a look up table, and/or a database), and/or generating, by the processing circuitry, a set of weights comprising the first weight associated with the first subsystem and the second weight associated with the second subsystem. In other words, for example, the first subsystem is provided with a first weight indicative of a health status (such as functional integrity, reliability, availability, physical condition, environmental resilience, resistance to failure modes, and/or dependability) of the first subsystem. In other words, for example, the second subsystem has a second weight indicative of a health status (indicating e.g. functional integrity, reliability, availability, physical condition, environmental resilience, resistance to failure modes, and/or dependability) of the second subsystem. The health (e.g. health status) of a subsystem may be seen its ability to perform its intended function reliably and consistently over time. The first weight is for example based on a first health parameter of the first subsystem. For example, when the first health parameter indicates a 100% reliable first subsystem (e.g. no failure ever occurred or discrepancies), the first weight may be 1. The second weight is for example based on a second health parameter of the second subsystem. In one or more example methods, obtaining S106 the set of weights comprises determining, based on the first, second, or third health parameter, the corresponding first, second, or third weight.

In some examples, the health parameter is determined based on, such as derived from, the health status of the corresponding subsystem. The health status for example comprises information indicative of a sensor availability associated with a subsystem, such as a sensor availability of a sensor of the one or more sensors 304 shown in Fig. 1. The health status may be associated with a factor affecting the subsystem, e.g., power, connection, integrity, temperature, etc. In some examples, the health parameter may be associated (such as based on) with a property and/or characteristic of the subsystem (e.g., whether the subsystem is associated with safety and/or whether the subsystem is a critical subsystem). For example, the health status may be based a category of the subsystem. In some examples, health parameter(s) may be retrieved by querying a look up table.

In some examples, one or more weights of the set of weights may be based on how much the corresponding subsystem affects the reliability of the measurements obtained, e.g., and its subsequent impact on safety, such as a safety of the vehicle 1 of Fig. 1. The set of weights are for example based on a health status of the one or more subsystems, e.g., such as one or more of the subsystems shown in Fig. 2. Furthermore, the disclosed method and systems may advantageously reduce the downtime of the vehicle, e.g., by ensure their continuous availability of one or more subsystems of the vehicle. In other words, operation of the vehicle can be safely continued even when ambiguities, such as discrepancies, between data from two or more subsystems are found, when these are determined to be acceptable, such as below a threshold. For example, the disclosed methods and systems may be advantageous when a fault, e.g., failure, of a subsystem is transient (e.g., temporary) as operation of the vehicle may continue until the fault rectifies.

In one or more example methods, the method 100 comprises comparing S108, by the processing circuitry, the first data with the second data. For example, an example comparison of S108 is illustrated in Table 1. In some example, comparing S108 the first and second data comprises determining whether the first and second data comprise one or more different values. For example, comparing S108 the first data with the second data comprises determining whether the first data and the second data meet a criterion, such as the first and second data matching withing a tolerance margin. For example, the comparison can detect that the first and second data comprise one or more different values, e.g., as shown in scenario 5 of Table 2. In one or more example methods, determining S114 the output based on the first data, the second data and the set of weights comprises determining S114C the output based on the comparison, such as the comparison of S108. In other words, the determination of the output is based on detecting a difference between the first and second data, and possibly then combining S114B or selecting S114A.

In some examples, when the difference (such as delta and/or divergence) between the first data and the second data satisfies a criterion, the computer system 300 may be configured to refrain from controlling (such as actuating), based on the control data, the vehicle (such as the vehicle 1 of Fig. 1). For example, the criterion is based on a threshold. In some examples, whether the difference satisfies the criterion depends on whether the difference is greater than or equal to the threshold. For example, when the difference is greater than or equal to the threshold, the criterion can be seen as being satisfied by the difference. For example, when the difference is less than the threshold, the criterion can be seen as not being satisfied by the difference. The threshold may for example be determined based on the subsystems associated with the first data and second data, for example based on the category of the subsystems. Safety critical subsystems, such as subsystems associated with braking, throttle, and/or steering of the vehicle may be associated with lower thresholds than non-safety critical subsystems, such subsystems associated with the comfort of a user of the vehicle, such as vehicle 1 shown in Fig. 1.

In some examples, the threshold may for example be contextual, such as based on the environment surrounding the vehicle and/or based on the operations of the vehicle. For example, when the vehicle is travelling at high velocity, the threshold associated with steering of the vehicle may be lower than if the vehicle is travelling at a lower velocity. In some examples, the threshold may be obtained based on a user input, such as a user of an electronic device communicatively coupled with the computer system 300. In other words, the threshold may for example be customizable, such as tunable.

In one or more example methods, the method 100 comprises obtaining S110, by the processing circuitry, third data from a monitoring subsystem associated with the first and/or second subsystem. The third data can for example be seen as monitoring data, such as data determined, such as calculated by a monitoring subsystem, such as the monitoring subsystem 30 of Fig. 2. In one or more example methods, the method 100 comprises comparing S112, by the processing circuitry, the first data and the second data with the third data. The monitoring subsystem may for example be a part of a core control unit and/or a safety unit. The monitoring subsystem, such as the monitoring subsystem 30 of Fig. 2, may for example examine whether first data and/or the second data is accurate (e.g., correct) by for example using extra input (such as sensor data) and/or simpler techniques for determination of the third than used for determination of the first and second data by the first and second subsystems respectively. For example, the first and/or second subsystems may determine the first and/or second data using a one or more algorithms and/or techniques. The monitoring subsystem may determine the third data using monitoring, such as comparing data from two sources or providing own observations or measurements. In other words, when the first and/or second subsystems provide substantially different from that of the monitoring subsystem, the monitoring subsystem may act as a fail-safe when compared with the first and second data in S 112.

The method 100 comprises determining S114, by the processing circuitry, an output based on the first data, the second data and the set of weights. The weights of the set of weights are for example based on the respective health parameters of the corresponding subsystems (e.g., the first weight corresponds to the first subsystem 26). The output may for example be seen as a weighted output combining the first data and the second data using the weights. The output can for example be seen as an output indicative of one or more operations to be performed by the vehicle, such as the vehicle 1. In some examples, determining S114 the output comprises applying the set of weights (e.g., the first weight, second weight, and/or optionally the third weight) to the first data 27, second data 29 and/or optionally the third data 31.

In one or more example methods, determining S114, by the processing circuitry, the output based on the first data, the second data and the set of weights comprises selecting S114A, from the first data and the second data, data from a subsystem associated with the highest weight. In some examples, selecting S114A data from a subsystem associated with the highest weight comprises determining which subsystem is associated with the highest weight, and select the data from such subsystem.

In one or more example methods, determining S114, by the processing circuitry, the output based on the first data, the second data and the set of weights comprises combining S114B the first data and the second data based on the set of weights. In some examples, combining S114B the first data and the second data based on the set of weights comprises aggregating the weighted data, e.g., where each the magnitude of the data has been modified by a respective weight applied to corresponding data.

In some examples, combining S114B the first data and the second data based on the set of weights comprises performing a weighted arbitration, e.g., by applying the set of weights to the first data and second data.

In one or more example methods, combining S114B the first data and the second data based on the set of weights comprises applying S114BA a linear combination based on the set of weights to the first data and the second data. The linear combination may for example be seen as a combination involving summing the weighted data for provision of the output, such as in a linear equation. In some examples, applying S114BA the linear combination comprises multiplying each of the first data and the second data by the corresponding weight and the weighted products may then be summed.

In one or more example methods, combining S114B the first data and the second data based on the set of weights comprises applying S114B one or more of: a weighted average using the set of weights, a weighted median using the set of weights, and a variance-weighted average. For example, applying a weighted median to the first and second data using the set of weights may include sorting the first and second data in ascending order, calculating the cumulative weights for the sorted first and second data, identifying the point where the cumulative weight is closest to or exceeds half of the total weight. For example, applying a variance weighted average to the first and second data using the set of weights may be seen as applying an inverse-variance weighting used to aggregate multiple random variables represented by the first and second data while minimizing the variance of the weighted average.

The method 100 comprises generating S116, by the processing circuitry, based on the output, control data for controlling the vehicle. The control data may be seen as instructions to the vehicle causing a control operation of the vehicle. The control operation can include for example: acceleration, braking, lane assistance, etc. In other words, the vehicle may be controlled on a more reliable output, as the output has been consolidated using data from redundant subsystems in a manner that considers their respective health status using weights. In one or more example methods, the method 100 comprises controlling S122, e.g., by the processing circuitry, the vehicle based on the control data. For example, controlling S122 the vehicle comprises controlling, using a control system and/or a drive-by-wire system of a vehicle, such as the control system 20 and/or the drive-by-wire system 25 shown in Fig. 1. In one or more example methods, the method 100 comprises transmitting S124, e.g., by the processing circuitry, to a vehicle computer system, the control data. The computer system disclosed herein may for example be seen as a system configured to control the vehicle, such as the vehicle 1 shown in Fig. 1. For example, when computer system 300 of Fig. 1 may be located externally to the vehicle, the computer system 300 of Fig. 1 may provide, to the computer vehicle system (such as the control system 20 and/or the drive-by wire system 25 shown in Fig. 1), the control data. In other words, the vehicle may be remotely controlled by the computer system 300 of Fig. 1, e.g., when the computer system 300 of Fig. 1 is a server device. For example, the computer system 300 may be configured to communicate wirelessly with the vehicle computer system.

In one or more example methods, the method 100 comprises obtaining S118, by the processing circuitry, updated health parameters. The updated health parameter as disclosed herein (such as an updated first health parameter, an updated second health parameter, and/or an updated third health parameter) may be seen as a parameter indicative of more recent health, such as a more recent health status, of the corresponding subsystem than the health parameter. For example, the monitoring subsystem may provide input to health parameters and their respective updates. In other words, the updated health parameter may be seen as a non-initial health parameter. In some examples, the updated health parameter is indicative of an updated reliability, availability and/or dependability of the corresponding subsystem. For example, as shown in Fig. 2, the updated first health parameter is indicative of an updated health of the first subsystem 26, the updated second health parameter is indicative of an updated health of the second subsystem 28, and/or the updated third health parameter is indicative of an updated health of the monitoring subsystem 30. In one or more examples, the updated health parameter can be seen as being associated with an updated reliability of the corresponding subsystem. For example, when the updated health parameter comprises a value, a higher value may indicate a greater health (such as availability, robustness, and/or reliability) of the corresponding subsystem.

In one or more example methods, the method 100 comprises updating S120, by the processing circuitry, the set of weights based the updated health parameters and a factor. In one or more example methods, determining S114 an output comprises determining the output based on the first data, the second data, and the updated set of weights updated in S120. The factor may for example be seen as a factor for smoothing, such as a smoothing factor. In other words, the factor may be seen as a forgetting factor. The factor may for example enable incremental updating of the set of weights. The factor is for example associated with, e.g., based on, a previous health status of a subsystem. The factor may for example enable a smooth transition of values of the weights of the set of weights. In other words, the factor may facilitate incremental change in a value of a weight of the set of weights, e.g., thereby reducing the stochasticity, unpredictability, and/or inconsistency of the weights and thereby of the output determined in S114. In some examples, the factor may to allow for a recovery of trust-ability of a subsystem, e.g., such as a trust-ability of the first subsystem in scenario 4 of Table 1. For example, when the health parameter of the primary subsystem goes from "faulty" to "fully operational", the weight of primary subsystem is not to go directly from 0.1 to 0.5, but to ramp up from 0.1 to 0.5 with a factor. In other words, the factors impact how the weight smoothly updates (e.g. how fast the time that the health parameters were in a "bad state" is forgotten.

The processor circuitry 302 of Fig. 1 is optionally configured to perform any of the operations disclosed in Fig.3A-B (such as any one or more of: S102, S102A, S104, S104A, S106, S108, S110, S112, S114, S114A, S114B, S114BA, S114BB, S114C, S116, S118, S120, S122, S124). The operations of the computer system 300 may be embodied in the form of executable logic routines (e.g., lines of code, software programs, etc.) that are stored on a non-transitory computer readable medium (e.g., the memory circuitry 301 of Fig. 1) and are executed by the processor circuitry 302 of Fig. 1).

Embodiments of methods and products (computer system) according to the disclosure are set out in the following examples:
Example 1. A computer-implemented method for controlling a vehicle, wherein the vehicle is associated with a first subsystem, and a second subsystem redundant to the first subsystem, the method comprising:
   receiving (S102), by processing circuitry of a computer system, from the first subsystem, first data associated with an operation to be performed by the vehicle;
   receiving (S104), by the processing circuitry, from the second subsystem, second data associated with the operation to be performed by the vehicle;
   obtaining (S106), by the processing circuitry, a set of weights comprising a first weight associated with the first subsystem and a second weight associated with the second subsystem, wherein the first weight is based on a first health parameter of the first subsystem, and the second weight is based on a second health parameter of the second subsystem;
   determining (S114), by the processing circuitry, an output based on the first data, the second data and the set of weights; and
   generating (5116), by the processing circuitry, based on the output, control data for controlling the vehicle.
Example 2. The method according to example 1, wherein determining (S114), by the processing circuitry, the output based on the first data, the second data and the set of weights comprises selecting (S114A), from the first data and the second data, data from a subsystem associated with the highest weight.
Example 3. The method according to any of the previous examples, wherein determining (S114), by the processing circuitry, the output based on the first data, the second data and the set of weights comprises combining (S114B) the first data and the second data based on the set of weights.
Example 4. The method according to example 3, wherein combining (S 114B) the first data and the second data based on the set of weights comprises applying (S114BA) a linear combination based on the set of weights to the first data and the second data.
Example 5. The method according to any of examples 3-4, wherein combining (S114B) the first data and the second data based on the set of weights comprises applying (S114BB) one or more of: a weighted average using the set of weights, a weighted median using the set of weights, and a variance-weighted average.
Example 6. The method according to any of the previous examples, the method comprising comparing (S108), by the processing circuitry, the first data with the second data.
Example 7. The method according to any of the previous examples, the method comprising:
   obtaining (S110), by the processing circuitry, third data from a monitoring subsystem associated with the first and/or second subsystem; and
   comparing (S112), by the processing circuitry, the first data and the second data with the third data.
Example 8. The method according to any of examples 6-7, wherein determining (S114) the output comprises determining (S114C) the output based on the comparison.
Example 9. The method according to any of the previous examples, wherein receiving (S102) the first data comprises receiving (S102A) a first instruction comprising the first data.
Example 10. The method according to any of the previous examples, wherein receiving (S104) the second data comprises receiving (S104A) a second instruction comprising the second data.
Example 11. The method according to any of the previous examples, wherein the first data and the second data are received in a same timeslot.
Example 12. The method according to any of the previous examples, the method comprising obtaining (S118), by the processing circuitry, updated health parameters.
Example 13. The method according to example 12, the method comprising updating (S120), by the processing circuitry, the set of weights based the updated health parameters and a factor.
Example 14. The method according to any of the previous examples, wherein the first subsystem, the second subsystem, or the first and second subsystems, comprises one or more of: a sensor, a software component, an electronic control unit, a steering subsystem, a controller subsystem.
Example 15. The method according to any of the previous examples, the method comprising controlling (S122), by the processing circuitry, the vehicle based on the control data.
Example 16. The method according to any of the previous examples, the method comprising transmitting (S124), by the processing circuitry, to a vehicle computer system, the control data.
Example 17. A computer system (300) comprising processing circuitry (302) for controlling a vehicle, wherein the vehicle is associated with a first subsystem, and a second subsystem redundant to the first subsystem, the processing circuitry being configured to:
   receive, from the first subsystem, first data associated with an operation to be performed by the vehicle;
   receive, from the second subsystem, second data associated with the operation to be performed by the vehicle;
   obtain a set of weights comprising a first weight associated with the first subsystem and a second weight associated with the second subsystem, wherein the first weight is based on a first health parameter of the first subsystem, and the second weight is based on a second health parameter of the second subsystem;
   determine an output based on the first data, the second data and the set of weights; and
      generate, based on the output, control data for controlling the vehicle.
Example 18. A vehicle (10) comprising a computer system (300) according to example 17.
Example 19. A computer program product comprising program code for performing, when executed by the processing circuitry, the method of any of examples 1-16.
Example 20. A non-transitory computer-readable storage medium comprising instructions, which when executed by the processing circuitry, cause the processing circuitry to perform the method of any of examples 1-16.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering. Furthermore, the labelling of a first element does not imply the presence of a second element and vice versa.

It may be appreciated that the Figures comprise some circuitries or operations which are illustrated with a solid line and some circuitries, components, features, or operations which are illustrated with a dashed line. Circuitries or operations which are comprised in a solid line are circuitries, components, features, or operations which are comprised in the broadest example. Circuitries, components, features, or operations which are comprised in a dashed line are examples which may be comprised in, or a part of, or are further circuitries, components, features, or operations which may be taken in addition to circuitries, components, features, or operations of the solid line examples. It should be appreciated that these operations need not be performed in order presented. Furthermore, it should be appreciated that not all of the operations need to be performed. The example operations may be performed in any order and in any combination. It should be appreciated that these operations need not be performed in order presented. Circuitries, components, features, or operations which are comprised in a dashed line may be considered optional.

Other operations that are not described herein can be incorporated in the example operations. For example, one or more additional operations can be performed before, after, simultaneously, or between any of the described operations.

Certain features discussed above as separate implementations can also be implemented in combination as a single implementation. Conversely, features described as a single implementation can also be implemented in multiple implementations separately or in any suitable sub-combination. Moreover, although features may be described above as acting in certain combinations, one or more features from a claimed combination can, in some cases, be excised from the combination, and the combination may be claimed as any sub-combination or variation of any sub-combination.

It is to be noted that the word "comprising" does not necessarily exclude the presence of other elements or steps than those listed.

It is to be noted that the words "a" or "an" preceding an element do not exclude the presence of a plurality of such elements.

It is to be noted that the term "indicative of" may be seen as "associated with", "related to", "descriptive of", "characterizing", and/or "defining". The terms "indicative of", "associated with", "related to", "descriptive of", "characterizing", and "defining" can be used interchangeably. The term "indicative of' can be seen as indicating a relation. For example, weight data indicative of weight may comprise one or more weight parameters.

It is to be noted that the word "based on" may be seen as "as a function of" and/or "derived from". The terms "based on" and "as a function of" can be used interchangeably. For example, a parameter determined "based on" a data set can be seen as a parameter determined "as a function of" the data set. In other words, the parameter may be an output of one or more functions with the data set as an input.

A function may be characterizing a relation between an input and an output, such as mathematical relation, a database relation, a hardware relation, logical relation, and/or other suitable relations.

It should further be noted that any reference signs do not limit the scope of the claims, that the examples may be implemented at least in part by means of both hardware and software, and that several "means", "units" or "devices" may be represented by the same item of hardware.

Language of degree used herein, such as the terms "approximately," "about," "generally," and "substantially" as used herein represent a value, amount, or characteristic close to the stated value, amount, or characteristic that still performs a desired function or achieves a desired result. For example, the terms "approximately", "about", "generally," and "substantially" may refer to an amount that is within less than or equal to 10% of, within less than or equal to 5% of, within less than or equal to 1% of, within less than or equal to 0.1% of, and within less than or equal to 0.01% of the stated amount. If the stated amount is 0 (e.g., none, having no), the above recited ranges can be specific ranges, and not within a particular % of the value. For example, within less than or equal to 10 wt./vol. % of, within less than or equal to 5 wt./vol. % of, within less than or equal to 1 wt./vol. % of, within less than or equal to 0.1 wt./vol. % of, and within less than or equal to 0.01 wt./vol. % of the stated amount.

The various example methods, devices, nodes, and systems described herein are described in the general context of method steps or processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program circuitries may include routines, programs, objects, components, data structures, etc. that perform specified tasks or implement specific abstract data types. Computer-executable instructions, associated data structures, and program circuitries represent examples of program code for executing steps of the methods disclosed herein. The particular sequence of such executable instructions or associated data structures represents examples of corresponding acts for implementing the functions described in such steps or processes.

Although features have been shown and described, it will be understood that they are not intended to limit the claimed disclosure, and it will be made obvious to those skilled in the art that various changes and modifications may be made without departing from the scope of the claimed disclosure. The specification and drawings are, accordingly, to be regarded in an illustrative rather than restrictive sense. The claimed disclosure is intended to cover all alternatives, modifications, and equivalents.

The terms "exemplary" and "example" as used herein may be used interchangeably. The term "exemplary" may be understood to mean "example".

## Claims

1. A computer-implemented method for controlling a vehicle, wherein the vehicle is associated with a first subsystem, and a second subsystem redundant to the first subsystem, the method comprising:
receiving (S102), by processing circuitry of a computer system, from the first subsystem, first data associated with an operation to be performed by the vehicle;
receiving (S104), by the processing circuitry, from the second subsystem, second data associated with the operation to be performed by the vehicle;
obtaining (S106), by the processing circuitry, a set of weights comprising a first weight associated with the first subsystem and a second weight associated with the second subsystem, wherein the first weight is based on a first health parameter of the first subsystem, and the second weight is based on a second health parameter of the second subsystem;
determining (S114), by the processing circuitry, an output based on the first data, the second data and the set of weights; and
generating (5116), by the processing circuitry, based on the output, control data for controlling the vehicle.

2. The method according to claim 1, wherein determining (S114), by the processing circuitry, the output based on the first data, the second data and the set of weights comprises selecting (S114A), from the first data and the second data, data from a subsystem associated with the highest weight.

3. The method according to any of the previous claims, wherein determining (S 114), by the processing circuitry, the output based on the first data, the second data and the set of weights comprises combining (S114B) the first data and the second data based on the set of weights.

4. The method according to claim 3, wherein combining (S114B) the first data and the second data based on the set of weights comprises applying (S114BA) a linear combination based on the set of weights to the first data and the second data.

5. The method according to any of claims 3-4, wherein combining (S114B) the first data and the second data based on the set of weights comprises applying (S114BB) one or more of: a weighted average using the set of weights, a weighted median using the set of weights, and a variance-weighted average.

6. The method according to any of the previous claims, the method comprising comparing (S108), by the processing circuitry, the first data with the second data.

7. The method according to any of the previous claims, the method comprising:
obtaining (S110), by the processing circuitry, third data from a monitoring subsystem associated with the first and/or second subsystem; and
comparing (S112), by the processing circuitry, the first data and the second data with the third data;
wherein determining (S114) the output comprises determining (S114C) the output based on the comparison.

8. The method according to any of the previous claims, wherein receiving (S102) the first data comprises receiving (S102A) a first instruction comprising the first data.

9. The method according to any of the previous claims, wherein receiving (S104) the second data comprises receiving (S104A) a second instruction comprising the second data.

10. The method according to any of the previous claims, wherein the first data and the second data are received in a same timeslot.

11. The method according to any of the previous claims, the method comprising obtaining (S118), by the processing circuitry, updated health parameters; and updating (S120), by the processing circuitry, the set of weights based the updated health parameters and a factor.

12. The method according to any of the previous claims, wherein the first subsystem, the second subsystem, or the first and second subsystems, comprises one or more of: a sensor, a software component, an electronic control unit, a steering subsystem, and a controller subsystem.

13. The method according to any of the previous claims, the method comprising controlling (S122), by the processing circuitry, the vehicle based on the control data.

14. A computer system (300) comprising processing circuitry (302) for controlling a vehicle, wherein the vehicle is associated with a first subsystem, and a second subsystem redundant to the first subsystem, the processing circuitry being configured to:
receive, from the first subsystem, first data associated with an operation to be performed by the vehicle;
receive, from the second subsystem, second data associated with the operation to be performed by the vehicle;
obtain a set of weights comprising a first weight associated with the first subsystem and a second weight associated with the second subsystem, wherein the first weight is based on a first health parameter of the first subsystem, and the second weight is based on a second health parameter of the second subsystem;
determine an output based on the first data, the second data and the set of weights; and
generate, based on the output, control data for controlling the vehicle.

15. A vehicle (10) comprising a computer system (300) according to claim 14.
